# EUROPÄISCHE PATENTSCHRIFT

(11) **EP 2 439 042 B1**
(45) Veröffentlichungstag und Bekanntmachung des Hinweises auf die Patenterteilung: **22.01.2014**
(21) Anmeldenummer: 10013361.0
(22) Anmeldetag: 06.10.2010
(51) Int. Cl.: B29C 45/16, B29C 45/14

(54) **Spritzgiesswerkzeug**
Injection moulding tool
Outil de moulage par injection

(43) Veröffentlichungstag der Anmeldung: 11.04.2012
(73) Patentinhaber: Otto Hofstetter AG, 8730 Uznach (CH)
(72) Erfinder: Nagl, Robert, 8723 Rufi (CH)
(74) Vertreter: Toleti, Martin

(56) Entgegenhaltungen:
- EP-A1- 0 073 356
- EP-A1- 1 108 516
- WO-A1-03/099544
- US-A- 4 422 995

## Beschreibung

### Gebiet der Erfindung

Die Erfindung betrifft ein Spritzgiesswerkzeug, eine Spritzgiessmaschine, und ein Verfahren zum Spritzen einer Tube.

### Hintergrund der Erfindung

Kunststofftuben finden heutzutage Anwendung zur Aufbewahrung vielerlei unterschiedlicher verformbarer Inhalte wie Lebensmittel, Kosmetika, Werkstoffe, etc.

Die Herstellung einer herkömmlichen Kunststofftube umfasst zumindest folgende nicht ineinander greifende Herstellungsschritte: Die Herstellung des Tubenkörpers aus einem weichen Kunststoff mittels Extrusionstechnik; die davon separate Herstellung eines Verschlussbodens mit Gewinde aus einem härteren Kunststoff; das Verbinden von Verschlussboden und Tubenkörper mittels Ultraschallschweissen; die Herstellung eines Verschlussdeckels zum Aufschrauben auf das Gewinde des Verschlussbodens; das Verschweissen der rückwärtigen Öffnung der Tube.

Ein solches Herstellungsverfahren ist gekennzeichnet durch die Anwendung einer Vielzahl unterschiedlicher Verfahrenschritte, die bei maschineller Herstellung den Einsatz unterschiedlicher Maschinen voraussetzen und damit einen Handhab- und Transportmechanismus für die einzelnen Zwischenprodukte zwischen den Maschinen.

Die US 4,422,995 zeigt ein Verfahren zum Spritzgießen eines länglichen hohlen Werkstücks um einen zentralen Kern herum. Eine erste Menge an Plastikmaterial wird in einen ersten Formhohlraum um einen Teil des Kerns gespritzt, um ein Abstandselement um den Kern zu bilden. Nachdem das Abstandselement ausgehärtet wurde, wird der Kern mit dem Abstandselement in einen zweiten Formhohlraum eingeführt, in dem das Abstandselement den Kern gegen die Wand abstützt. Dann wird eine zweite Menge an Kunststoff in den zweiten Formhohlraum eingespritzt wird, um das Werkstück zu vervollständigen.

In der EP 0 073 356 ist die Herstellung einer genauen Passung zwischen einem Außengewinde am Gewindehals einer Tube aus Kunststoff und einem Innengewinde an der zugehörigen Verschlußkappe gezeigt. Zunächst wird in einer Spritzformeinheit ein Tubenkörper gespritzt, sodann nach dem Spritzen der den Gewindehals herstellende Formteil entfernt und anstelle dessen ein Formteil für das Spritzen der Verschlußkappe auf die Stirnfläche des Formteils für den Tubenkörper aufgesetzt. In dem Formnest des Kappenformteils bildet der vorher gespritzte Gewindehals des Tubenkörpers und ein Teil des konischen Zwischenstücks desselben den Kern, um den herum die Verschlußkappe gespritzt wird.

### Darstellung der Erfindung

Insofern ist es Aufgabe der Erfindung die Herstellung von Tuben zu vereinfachen.

Diese Aufgabe wird einerseits gelöst durch ein Spritzgiesswerkzeug gemäss Patentanspruch 1. Dieses Spritzgiesswerkzeug umfasst ein Mittelteil, mindestens einen ersten Kern zu einer ersten Seite des Mittelteils und eine erste Matrize, die zusammen mit dem ersten Kern eine erste rohrförmige Kavität bildet. Es umfasst weiterhin mindestens einen weiteren Kern zu einer weiteren Seite des Mittelteils und eine weitere Matrize, die zusammen mit dem weiteren Kern eine weitere rohrförmige Kavität bildet. Ferner ist ein erstes Angusssystem für das Spritzgiessen eines ersten Kunststoffs in die eine Kavität zum Bilden eines Tubenkörpers in dieser Kavität vorgesehen. Ein weiteres Angusssystem dient dem Spritzgiessen eines weiteren Kunststoffs in eine Form zum Bilden eines Verschlussteils für einen in der anderen Kavität angeordneten Tubenkörper. Die Form für das Verschlussteil wird dabei derart durch einen in der anderen Kavität enthaltenen Tubenkörper mit bestimmt, dass beim Spritzgiessen des Verschlussteils das Verschlussteil an diesen Tubenkörper angespritzt wird.

Die Aufgabe wird andererseits gelöst durch ein Verfahren zum Spritzgiessen einer Tube gemäss Patentanspruch 10, bei dem eine erste Spritzeinheit einen ersten Kunststoff in eine erste Kavität eines Spritzgiesswerkzeugs zum Bilden des Tubenkörpers spritztgiesst, und bei dem eine weitere Spritzeinheit ein Verschlussteil aus einem weiteren Kunststoff an einen in einer weiteren Kavität des Spritzgiesswerkzeugs enthaltenen Tubenkörper anspritzt.

Tubenkörper wie Verschlussteil können demgemäss in einem gemeinsamen Herstellungsprozess, nämlich dem Spritzgiessen, hergestellt werden, unter Zuhilfenahme eines einzigen Spritzgiesswerkzeugs und einer einzigen Spritzgiessmaschine. Zwischenprodukte wie Tubenkörper brauchen nicht mehr für einen Maschinenwechsel bewegt werden. Sie bleiben vielmehr im Spritzgiesswerkzeug an Ort und Stelle auch für die Erstellung des Verschlussteils und seine Verbindung mit dem Tubenkörper. Wird gemäss einer vorteilhaften Weiterbildung der erste Kunststoff an eine in die eine Kavität eingelegte Folie angespritzt zum Bilden des Tubenkörpers, so erlaubt der vorgeschlagenen Gegenstand auch hinsichtlich der Gestaltung der Tube eine grosse Flexibilität, da eine Vielzahl unterschiedlich ausgebildeter oder gestalteter Folien eingesetzt werden kann. Farbwechsel, Aufdrucke etc lassen sich also ohne eine Änderung der Herstellungsverfahrens und seines Werkzeugs einfach umsetzen.

Dadurch, dass die Form für das Verschlussteil im Spritzgiesswerkzeug neben anderen Formbestandteilen mitgebildet wird durch einen in der zugeordneten Kavität enthaltenen Tubenkörper, wird gleichzeitig mit der Erstellung des Verschlussteils durch Spritzgiessen dieses Verschlussteil auch mit dem Tubenkörper verbunden, d.h. an den Tubenkörper angespritzt.

Vorzugsweise ist der erste Kunststoff in gehärtetem Zustand weicher als der zweite Kunststoff. Dadurch soll eine Ausbildung der Tube gewährleistet werden, bei der einerseits das Verschlussteil für die mechanische Stabilität sorgt und andererseits der Tubenkörper gut verformbar zum Herausdrücken des Tubeninhaltes ist.

Vorzugsweise ist das Mittelteil zum Spritzgiessen derart ausgerichtet, dass die eine Kavität, in die vorzugsweise eine Folie eingelegt ist und an die der erste Kunststoff zur Bildung eines Tubenkörpers angespritzt werden soll, in einer Position ist, die ein Zusammenwirken mit dem ersten Angusssystem erlaubt. Ein Zusammenwirken ist erlaubt, wenn in dieser Position das erste Angusssystem und die Kavität so zueinander angeordnet und ausgerichtet sind, dass durch Beaufschlagung des ersten Angusssystems mit dem ersten Kunststoff dieser in die Kavität eingespritzt wird und zusammen mit der Folie den Tubenkörper bildet. Gleichzeitig wird in dieser Ausrichtung des Mittelteils ein Zusammenwirken der anderen Kavität mit dem weiteren Angusssystem ermöglicht. Ein Zusammenwirken ist erlaubt, wenn in dieser Position das weitere Angusssystem und die Kavität so zueinander angeordnet und ausgerichtet sind, dass durch Beaufschlagung des weiteren Angusssystems mit dem weiteren Kunststoff dieser in die Form eingespritzt wird und dadurch das Verschlussteil gebildet und an den in dieser Kavität enthaltenen Tubenkörper angespritzt wird. Vorzugsweise erfolgen dann auch die Spritzgussvorgänge parallel, d.h. insbesondere werden gleichzeitig sowohl ein Tubenkörper in der einen Kavität und ein Verschlussteil an einen in der anderen Kavität enthaltenen Tubenkörper hergestellt, ohne dass das Spritzgiesswerkzeug oder die Spritzgiessmaschine bewegt werden müsste.

In einer weiteren vorteilhaften Weiterbildung ist das Mittelteil drehbar gelagert. Damit kann beispielsweise nach einem obigen simultanen Spritzgiessen der gespritzte Tubenkörper in der einen Kavität mittels Rotation des Mittelteils in eine Position gebracht werden, in der er mit dem weiteren Angusssystem zusammen wirken kann, um abschliessend das Verschlussteil an den Tubenkörper zu spritzen. Gleichzeitig wird die andere Kavität in eine Position gebracht, in der sie mit dem ersten Angusssystem zusammenwirken kann zum Erstellen eines weiteren Tubenkörpers. Insofern rotieren die Kavitäten zwischen den Angusssystemen, sodass einmal die erste Kavität mit dem ersten Angusssystem zusammenwirkt und nach einer Drehbewegung mit dem weiteren Angusssystem, und sodass einmal die weitere Kavität mit dem weiteren Angusssystem zusammenwirkt und nach einer Drehbewegung mit dem ersten Angusssystem. Vorzugsweise wird zeitlich vor einer solchen Drehbewegung die vollständige Tube aus Tubenkörper und Verschlussteil entformt und der zugehörigen Kavität entnommen, sodass diese Kavität vorbereitet werden kann zum Bilden eines weiteren Tubenkörpers, beispielsweise durch das Einlegen einer neuen Folie in diese Kavität.

Weitere vorteilhafte Weiterbildungen der Erfindung sind den abhängigen Ansprüchen zu entnehmen. Im Zusammenhang mit dem Spritzgiesswerkzeug erläuterte Ausbildungsformen gelten auch als offenbart in Bezug auf das Verfahren, und umgekehrt. Verfahrensschritte sind nicht notwendigerweise in der in den Ansprüchen angegebenen Reihenfolge auszuführen. Eine andere Reihenfolge gilt als vom Schutz mit umfasst.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
FIG. 1a bis 1f, eine schematische Spritzgussmaschine in Draufsicht nach einer Ausführungsform der Erfindung, in verschiedenen Verfahrensschritten,
FIG. 2a einen beispielhaften Tubenkörper in perspektivischer Ansicht,
FIG. 2b ein beispielhaftes Verschlussteil für eine Tube in perspektivischer Ansicht,
FIG. 3 eine Seitenansicht einer beispielhaften Tube,
FIG. 4 ein Schnittbild durch ein an einen Tubenkörper spritzgegossenes Verschlussteil.

### Weg(e) zur Ausführung der Erfindung

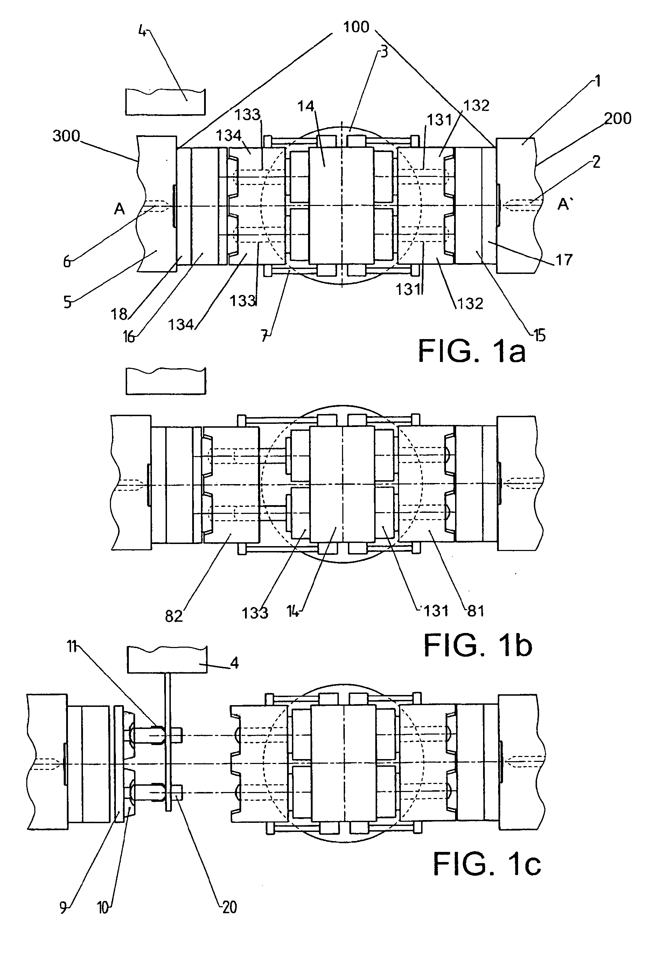

FIG. 1a zeigt schematisch eine Spritzgussmaschine in Draufsicht nach einer Ausführungsform der Erfindung. Die Spritzgussmaschine enthält eine erste Spritzeinheit 200 und eine weitere Spritzeinheit 300. Im vorliegenden Beispiel ist die erste Spritzeinheit 200 stationär angeordnet, wohingegen die weitere Spritzeinheit 300 verschieblich gelagert ist entlang einer Längsachse A- A' der Spritzgussmaschine. Alternativ können auch beide Spritzeinheiten 200, 300 gegeneinander verschieblich gelagert sein. Die vorliegende Spritzgussmaschine mit zwei Spritzeinheiten 200, 300 ist grundsätzlich zum zeitgleichen Betrieb der Spritzeinheiten 200 und 300 ausgelegt. Die erste Spritzeinheit 200 enthält ein erstes Spritzaggregat 2 angeordnet in einer stationären Maschinenplatte 1. Die weitere Spritzeinheit 300 enthält ein weiteres Spritzaggregat 6 angeordnet in einer längsverschieblichen Maschinenplatte 5.

Zwischen den Maschinenplatten 1 und 5 der Spritzeinheiten 200 und 300 ist ein Spritzgiesswerkzeug 100 angeordnet. Insofern zeigt FIG. 1a die Spritzgiessmaschine in "geschlossenem" Zustand, welcher Zustand für das Spritzgiessen mit den Spritzeinheiten 200 und 300 erforderlich ist, und bei welchem Zustand die Spritzeinheiten 200 und 300 an dem Spritzgiesswerkzeug 100 anliegen.

Das Spritzgiesswerkzeug 100 enthält ein erstes Angusssystem 15, das über eine werkzeugseitige Maschinenplatte 17 fest mit der Maschinenplatte 1 der ersten Spritzeinheit 200 verbunden ist. Das erste Angusssystem 15 ist vorzugsweise ein Heizkanalsystem, auch Hotrunner genannt, das den zu spritzenden Kunststoff aus dem ersten Spritzaggregat 2 übernimmt, gegebenenfalls verteilt, und zur Form hin austreten lässt. Das Spritzgiesswerkzeug enthält ein weiteres Angusssystem 16, das über eine werkzeugseitige Maschinenplatte 18 fest mit der Maschinenplatte 5 der weiteren Spritzeinheit 300 verbunden ist. Das weitere Angusssystem 16 ist vorzugsweise ein Heizkanalsystem, auch Hotrunner genannt, das den zu spritzenden Kunststoff aus dem weiteren Spritzaggregat 6 übernimmt, gegebenenfalls verteilt, und zur Form hin austreten lässt. Mittels der festen Anbindung des ersten Angusssystems 15 an die erste Spritzeinheit 200 ist dieses ebenfalls stationär angeordnet, wohingegen durch die feste Anbindung des weiteren Angusssystems 16 an die weitere, längs verschiebliche Spritzeinheit 300 dieses ebenfalls längs verschieblich angeordnet ist.

Das Spritzgiesswerkzeug 100 enthält ein Mittelteil 14, das auf einem schematisch eingezeichneten Drehtisch 3 der Spritzgussmaschine angeordnet ist. Am Mittelteil 14 angeordnet, und mit diesem fest verbunden, sind zwei erste Kerne 131, die mit zwei ersten Matrizen 132 zusammenwirken und erste rohrförmige Kavitäten zwischen je einem ersten Kern 131 und einer zugehörigen ersten Matrize 132 bilden. Es wird darauf hingewiesen, dass zusätzliche erste Kavitäten, insbesondere zusätzliche zwei oder mehr erste Kavitäten, durch weitere erste Kerne und weitere erste Matrizen gebildet sein können, insbesondere angeordnet in die Zeichenebene hinein, um den Durchsatz der Spritzgiessmaschine zu erhöhen.

Am Mittelteil 14 sind ferner angeordnet, und mit diesem fest verbunden, zwei weitere Kerne 133, die mit zwei weiteren Matrizen 134 zusammenwirken und weitere rohrförmige Kavitäten zwischen je einem weiteren Kern 133 und einer weiteren Matrize 134 bilden. Es wird darauf hingewiesen, dass zusätzliche weitere Kavitäten, insbesondere zusätzliche zwei oder mehr weitere Kavitäten, durch zusätzliche weitere Kerne und zusätzliche weitere Matrizen gebildet sein können, insbesondere angeordnet in die Zeichenebene hinein, um den Durchsatz der Spritzgiessmaschine zu erhöhen.

Die ersten Kerne 131 und die weiteren Kerne 133 sind zueinander um 180 Grad versetzt am Mittelteil 14 befestigt. In einer anderen Ausführung können die ersten und weiteren Kerne 131, 133 auch um 90 Grad versetzt am Mittelteil 14 angeordnet sein. Dies mag eine Ausrichtung der Spritzeinheiten 200 und 300 um 90 Grad zueinander bedingen. In einer weiteren Ausführung können Kerne zu allen vier Seiten, also jeweils um 90 Grad versetzt am rechteckigen Mittelteil 14 angeordnet sein. Somit sind immer zwei Seiten mit Kernen frei zugänglich für eventuelle Bestückungsvorgänge, z.B. mit Folien, oder auch Entformungsvorgänge für die fertig gestellten Tuben. Auch kann ein Verweilen von Spritzgussteilen in diesen Positionen zum Aushärten des Kunststoffs verwendet werden. Insgesamt kann damit die Zykluszeit verringert werden.

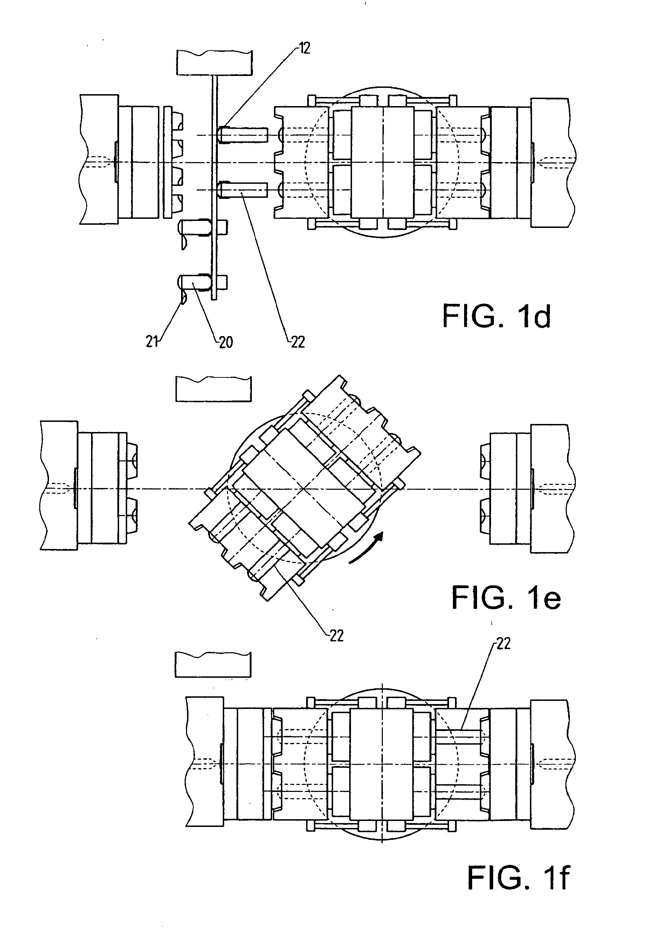

In Figur 1 sind die Matrizen 132 und 134 verschieblich entlang der Längsachse A - A' gelagert und können über Antriebe, beispielsweise in Form von Hydraulikzylindern 7, von einer ersten Position am Mittelteil 14, siehe Figur 1a, in eine zweite von dem Mittelteil 14 beabstandete Position, siehe Figur 1b, bewegt und wieder zurück bewegt werden. In der ersten Position bildet die Matrize mit dem zugehörigen Kern eine Kavität.

Die ersten Matrizen 132 sind typischerweise zusammengefasst in einer Matrizenplatte 81, und die weiteren Matrizen 134 in einer weiteren Matrizenplatte 82. Typischerweise wird bei obiger Verschiebung der Matrizen immer die gesamte Matrizenplatte 81 bzw. 82 bewegt. Die Matrizenplatten 81 und 82 stützen sich in einer bevorzugten Weiterbildung auf dem Drehtisch 3 ab und können so auf dem Drehtisch 3 gelagert sein.

In dem Spritzgiesswerkzeug nach Figur 1 ist - was jedoch nicht aus der Figur ersichtlich ist - in jede erste Kavität eine Folie eingelegt, wohingegen in jeder weiteren Kavität ein bereits spritzgegossener Tubenkörper enthalten ist. In dem geschlossenen Zustand des Spritzgiesswerkzeugs und auch der Spritzgiessmaschine gemäss Figur 1a kann nun mit beiden Spritzeinheiten 200 und 300 spritzgegossen werden. Das erste Spritzaggregat 2 spritzt über das Angusssystem 15 in jede der ersten Kavitäten einen ersten Kunststoff zum Bilden von Tubenkörpern. Das erste Angusssystem 15 enthält dabei einen Verteiler, der in eine Anzahl von Düsen mündet, die in der Ausrichtung nach Figur 1a mit den ersten Kavitäten korrespondieren, sodass der Kunststoff in jede erste Kavität an die eingelegten Folien gespritzt wird.

Gleichzeitig, oder aber zeitlich versetzt, jedenfalls aber in derselben Ausrichtung des Spritzgiesswerkzeugs und der Spritzgiessmaschine spritzt das weitere Spritzaggregat 6 über das weitere Angusssystems 16 einen weiteren, typischerweise härteren Kunststoff als der erste Kunststoff, an die in den weiteren Kavitäten enthaltenen Tubenkörpern zur Bildung eines Verschlussteils. Dabei ist für jede weitere Kavität eine Form vorgesehen für ein solches Verschlussteil. Zur vollständigen Bildung einer Form für ein Verschlussteil wird auch der in der weiteren Kavität enthaltene Tubenkörper benötigt, sodass beim Spritzgiessen des Verschlussteils dieses an den Tubenkörper angespritzt wird. Würde in der weiteren Kavität kein Tubenkörper enthalten sein, so würde die Form für das Verschlussteil gegen die weitere Kavität hin geöffnet sein, d.h. eine kreisrunde gegen den Querschnitt der weiteren Kavität gerichtete Öffnung aufweisen. Das weitere Angusssystem 16 enthält in diesem Ausführungsbeispiel ebenfalls einen Verteiler, der in eine Anzahl von Düsen mündet, die in der Stellung nach Figur 1a mit den weiteren Kavitäten beziehungsweise den Formen für die Verschlussteile korrespondieren, sodass der weitere Kunststoff in jede der den weiteren Kavitäten zugeordneten Formen eingespritzt wird.

In den folgenden Diagrammen sind gleiche Elemente durch gleiche Bezugszeichen gekennzeichnet, wobei allerdings aus Gründen der Übersichtlichkeit auf eine zu Figur 1a redundante Kennzeichnung mit Bezugszeichen weitestgehend verzichtet wurde.

Nach dem Spritzgiessen durch beide Spritzeinheiten 200 und 300 in das wie in Figur 1 vorbereitete und ausgerichtete Spritzgiesswerkzeug 100 enthalten also die ersten Kavitäten Tubenkörper ohne Verschlussteile, wohingegen die weiteren Kavitäten Tubenkörper mit angespritzen Verschlussteilen enthalten. Diese im Sinne des Spritzgiessens fertig gestellten Tuben in den weiteren Kavitäten werden nun entformt. Dazu wird in Figur 1b zunächst die Spritzgiessmaschine geöffnet. In der vorliegenden Konfiguration der Spritzgiessmaschine wird dazu die weitere Spritzeinheit 300 zurückgefahren, d.h. von der ersten Spritzeinheit 200 wegbewegt. Die weitere Matrizenplatte 82 mit den weiteren Matrizen 134 wird ebenfalls ausgefahren und in ihre vom Mittelteil 14 beabstandete Position gebracht. Dabei kann das weitere Angusssystem 16 als mechanischer Anschlag dienen. Infolge dieses Öffnens der Matrizenplatte 82 werden die Tubenkörper der fertigen Tuben von ihren Kernen 133 entformt. Es wird in diesem Verfahrenschritt angenommen, dass die fertigen Tuben festgehalten werden durch einen Schieber 10, wie er beispielsweise aus Figur 1c ersichtlich ist. Ferner ist davon auszugehen, dass das Verschlussteil der fertigen Tube nach wie vor im Presssitz auf einem eigenen zugeordneten Kern sitzt. Infolge der Bewegung der weiteren Spritzeinheit 300 und der Matrizenplatte 82 weg vom Mittelteil 14 folgen die fertig gestellten Tuben dieser Bewegung und lösen sich von ihrem Kern 133.

In einem nächsten Schritt wird die Matrizenplatte 82 wieder zurückbewegt in ihre erste Position am Mittelteil 14 ohne dass aber die weitere Spritzeinheit dieser Bewegung folgt. Dadurch wird der Tubenkörper nun auch von seiner Matrize 134 entformt.

In diesem Zustand, der dem Zustand nach Figur 1c entspricht, werden die fertig gestellten Tuben gehalten von einem an der weiteren Spritzeinheit 300 angeordneten Schieber 10 des Spritzgiesswerkzeuges 100. Der Schieber selbst ist am weiteren Angusssystem 16 angeordnet und demzufolge zusammen mit der weiteren Spritzeinheit 300 verschieblich gelagert. In der Stellung nach Figur 1c bewirkt eine Abstreifplatte 9 das Entformen der Verschlussteile von den zugeordneten Kernen. Vor diesem Entformungsschritt oder danach greift ein Roboter 4 mit Entnahmegreifern 11 nach den Tuben, hier speziell nach den Tubenkörpern 20, und hält diese fest. In diesem Zustand kann nun auch der Schieber 10 geöffnet werden, der die Tuben vom Werkzeug freigibt, so dass die Tuben nur noch von den Entnahmegreifern 11 des Roboters 4 gehalten werden.

Anschliessend fährt der senkrecht zur Achse A - A' eingreifende Roboterarm weiter und entfernt die fertig gestellten Tuben mit ihrem Tubenkörpern 20 und Verschlussteilen 21 aus dem Werkzeug, siehe Figur 1d. Der Roboterarm enthält weiterhin Einlegearme 12 zum Bestücken der nun freien weiteren Kavitäten 134 mit neuen Folien. Nach dem Einlegen und möglicherweise dem Freigeben der fertig gestellten Tuben an eine geeignete Sammelstelle verlässt der Roboterarm wieder den Bereich des Spritzgiesswerkzeugs 100. In einer alternativen Weiterbildung kann der Roboterarm Greifer aufweisen, die ermöglichen, dass in einer einzigen Position des Roboterarms senkrecht zur Achse A - A' die fertigen Tuben gegriffen und neue Folien in die frei gewordenen Kavitäten eingelegt werden. Der Roboterarm kann danach wieder in seine Ausgangsposition zurückfahren, ohne dass ein Weiterfahren der Roboterarms in obigem Sinne zum Einlegen der neuen Folien erforderlich ist.

Gemäss Figur 1e wird nun zunächst der Drehtisch 3 entlang der Längsachse A - A' der Spritzgiessmaschine verschoben weg von der ersten Spritzeinheit 200 auf die weitere Spritzeinheit 300 zu, zumindest so weit, dass die auf dem Drehtisch 3 angeordneten Werkzeugbestandteile wie Mittelteil 14 und Matrizenplatten 81, und 82 gedreht werden können ohne gegen eine der Spritzeinheiten 200, 300 zu stossen. Der Mittelteil 14 mit den eingefahrenen Matrizenplatten 81 und 82 wird dann um 180 Grad gedreht. Es ist an dieser Stelle zu bemerken, dass bezüglich der ersten Kavitäten zwischenzeitlich keine Aktivitäten vorgenommen wurden, d.h. die ersten Matrizen 133 sind geschlossen und die ersten Kavitäten enthalten spritzgegossene Tubenkörper, die nun mit um 180 Grad gedreht werden. Nach dem Beenden des Drehens um 180 Grad zeigen diese Tubenkörper also in Richtung der weiteren Spritzeinheit 300, wohingegen die weiteren Kavitäten - jede bestückt mit einer eingelegten Folie 22 - nun in Richtung der ersten Spritzeinheit 200 zeigen. In der Folge wird die Maschine wieder geschlossen, d.h. der Drehtisch 3 fährt längs zurück zur ersten Spritzeinheit 200, und die weitere Spritzeinheit 300 fährt auf das Mittelteil 14 zu, sodass nun wiederum die geschlossenen Stellung sowohl der Spritzgiesswerkzeugs als auch der Maschine gemäss Figur 1a vorliegt mit dem Unterschied, dass nun die weiteren Kavitäten mit eingelegten Folien bestückt und in einer Position sind, in der sie mit dem stationären ersten Angusssystem 15 und entsprechend mit der stationären ersten Spritzeinheit 200 zusammenwirken können zum Spritzgiessen von Tubenkörpern, und andererseits nun die ersten Kavitäten gefüllt sind mit Tubenkörpern und in einer Position sind, in der sie mit dem weiteren Angusssystem 16 und entsprechend mit der weiteren Spritzeinheit 300 zusammenwirken können zum Anspritzen von Verschlussteilen an die Tubenkörper.

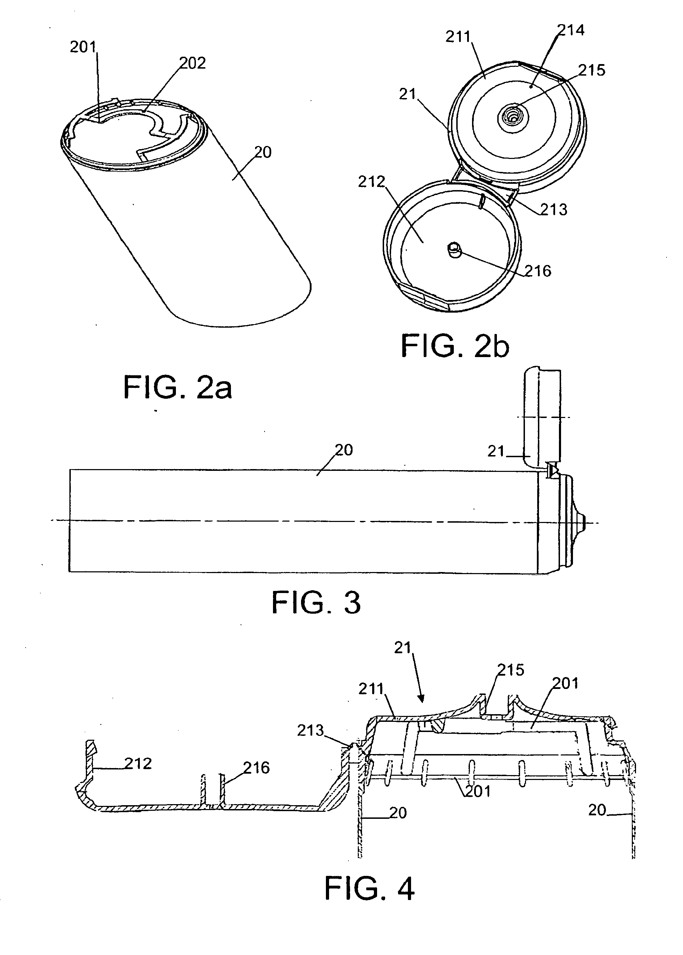

FIG. 2a zeigt einen beispielhaften Tubenkörper 20 in perspektivischer Ansicht wie er nach dem ersten Spritzgiessvorgang mit dem ersten Kunststoff in der zugehörigen Kavität angetroffen werden kann. Der Tubenkörper 20 enthält ein Abschlussteil 201, das durch eine entsprechende Form gebildet wird. Das Abschlussteil 201 markiert den oberen Rand des Tubenkörpers 20 und nimmt überwiegend die Form von Stegen ein, an die das Verschlussteil in einem zweiten Spritzgiessvorgang angeformt werden kann. Beispielhaft ist ein Anspritzpunkt 202 für das Spritzgiessen des Tubenkörpers mit dem Abschlussteil angegeben. Die Form für das Abschlussteil 201 wird vorzugsweise gebildet durch den Kern 131 bzw. 133 sowie ein stationär angeordnetes Formteil zur Seite des ersten Angusssystems 15, das die Stege mit definiert.

FIG. 2b zeigt ein beispielhaftes Verschlussteil 21 für eine Tube in perspektivischer Ansicht. Das Verschlussteil 21 enthält einen Verschlussboden 211, der umfänglich mit dem Rand des Tubenkörpers 20 durch Spritzgiessen verbunden wird. Der Verschlussboden 211 enthält mittig eine Öffnung 215, aus der der später ein Tubeninhalt herausgedrückt werden kann. Beispielhaft ist ein Anspritzpunkt 214 angegeben zum Spritzgiessen des Verschlussteils 21. Einstückig mit dem Verschlussboden 211 sind ein Scharnier 213 und ein Verschlussdeckel 212 ausgebildet. Alle Bestandteile des Verschlussteils 21 werden in einem einzigen Spritzgiessvorgang erstellt. Der Verschlussdeckel 212 enthält einen Zapfen 216, der bei geschlossenem Verschlussdeckel 212 in die Öffnung 215 des Verschlussbodens 211 ragt und diese verschliesst. Zudem kann beispielsweise der Verschlussboden 211 ein gegenüber dem Innenradius des Verschlussdeckels 212 geringes radiales Übermass aufweisen, sodass ein Klickverschluss gebildet wird, bei dem der Verschlussdeckel 212 auf den Verschlussboden 211 gedrückt wird und dort im Presssitz die Tube verschlossen hält bis genügend Kraft aufgewendet wird, um diesen Presssitz wieder zu lösen.

FIG. 3 zeigt eine Seitenansicht von einer beispielhaften Tube bestehend aus einem Tubenkörper 20 nach Figur 2a und einem Verschlussteil 21 nach Figur 2b.

FIG. 4 zeigt einen Schnitt durch ein an einen Tubenkörper 20 angespritztes Verschlussteil 21 nach einem Ausführungsbeispiel der Erfindung. Das Verschlussteil 21 entspricht dabei dem Verschlussteil aus Figur 2b. Infolge der Schraffuren wird ersichtlich, dass das Verschlussteil 21 direkt mit dem Umfang seines Verschlussbodens 211 an den oberen Rand des Tubenkörpers 20 angespritzt ist.

Ferner zeigt Figur 4 das Verschlussteil 21 in seiner geöffneten Position, in der der Verschlussboden 211 und der Verschlussdeckel 212 in einer waagerechten Ebene liegen bei nahezu völlig geöffnetem Scharnier 213. In dieser Position wird das Verschlussteil 21 vorzugsweise auch spritzgegossen, d.h. eine Form für das Verschlussteil 21 im Spritzgiesswerkzeug 100 ist entsprechend gestaltet. Die Form für das Verschlussteil 21 wird gebildet durch Formteile, die das Negativ der Aussenform des Verschlussteils 21 bilden. Einiger solcher Formteile sind vorzugsweise in dem weiteren Angusssystem 16 integriert, beispielsweise um die Oberseite des Verschlussbodens 211 zu definieren oder auch die Innenseite des Verschlussdeckels 212 oder die Innenseite des Scharniers 213. Das weitere Angussystem 216 selbst kann auch eine derartige Kontur aufweisen, so dass in diesem Fall die obigen Formteile vollständig in das weitere Angusssystem 16 integriert sind. Die Oberseite des Verschlussdeckels 212 kann beispielsweise durch ein Formteil gebildet werden, das auf der Matrizenplatte 81, 82 angeordnet ist oder vollständig in diese integriert ist. Gleiches gilt für die Aussenseite des Scharniers 213. Als Formteil zum Bilden der Unterseite des Verschlussbodens 211 dient vorzugsweise der Kern 131, 133 auf dem der Tubenkörper steckt. Abschliessend ist der Rand des in der Kavität enthaltenen Tubenkörpers selbst als Formteil zu nennen, das die Form für das Verschlussteil 21 komplettiert, sodass das spritzgegossene weitere Material sich an den Tubenkörper anbindet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Spritzgiesswerkzeug,
mit einem Mittelteil (14),
mit mindestens einem ersten Kern (131) zu einer ersten Seite des Mittelteils (14) und mit einer ersten Matrize (132), die zusammen mit dem ersten Kern (131) eine erste rohrförmige Kavität bildet,
mit mindestens einem weiteren Kern (133) zu einer weiteren Seite des Mittelteils (14) und mit einer weiteren Matrize (134), die zusammen mit dem weiteren Kern (133) eine weitere rohrförmige Kavität bildet,
mit einem ersten Angusssystem (15) für das Spritzgiessen eines ersten Kunststoffs in die eine Kavität zum Bilden eines Tubenkörpers (20) in dieser Kavität, und
mit einem weiteren Angusssystem (16) für das Spritzgiessen eines weiteren Kunststoffs in eine Form zum Bilden eines Verschlussteils (21) für einen in der anderen Kavität angeordneten Tubenkörper, welcher Tubenkörper die Form für das Verschlussteil (21) derart mit bestimmt, dass beim Spritzgiessen des Verschlussteils (21) das Verschlussteil (21) an den Tubenkörper angespritzt wird.

2. Spritzgiesswerkzeug nach Anspruch 1, mit einer Ausrichtung des Mittelteils (14) zum Spritzgiessen derart, dass die eine Kavität eine Position zum Zusammenwirken mit dem ersten Angusssystem (15) einnimmt, und gleichzeitig die andere Kavität eine Position zum Zusammenwirken mit dem weiteren Angusssystem (16) einnimmt.

3. Spritzgiesswerkzeug nach Anspruch 1 oder Anspruch 2, bei dem das Mittelteil (14) drehbar gelagert ist zu seiner Überführung in eine Ausrichtung, in der die eine Kavität eine Position zum Zusammenwirken mit dem weiteren Angusssystem (16) einnimmt, und zum gleichzeitigen Überführen der anderen Kavität in eine Position zum Zusammenwirken mit dem ersten Angusssystem (15).

4. Spritzgiesswerkzeug nach einem der vorhergehenden Ansprüche, bei dem das erste Angusssystem (15) ausgebildet ist für das Spritzgiessen des ersten Kunststoffs an eine in die eine Kavität eingelegte Folie zum Bilden des Tubenkörpers (20) in dieser Kavität, und bei dem insbesondere eine Form vorgesehen ist für das Spritzgiessen eines stirnseitigen Abschlussteils (201) des Tubenkörpers (20) mittels des ersten Angusssystems (15).

5. Spritzgiesswerkzeug nach einem der vorhergehenden Ansprüche, bei dem das erste Angusssystem (15) stationär angeordnet ist und das weitere Angusssystem (16) verschieblich angeordnet ist.

6. Spritzgiesswerkzeug nach einem der vorhergehenden Ansprüche, bei dem die Form für das Verschlussteil (21) ausgebildet ist für das Spritzgiessen eines Verschlussteils (21) mit einem Verschlussboden (211) und einem über ein Scharnier (213) mit dem Verschlussboden (211) verbundenen Verschlussdeckel (212), und bei dem die Form für den Verschlussboden (211) angeordnet ist zum umfänglichen Anspritzen des Verschlussbodens (211) an den Tubenkörper (20).

7. Spritzgiesswerkzeug nach Anspruch 6, bei dem die Form für das Verschlussteil (21) das Verschlussteil (21) mit geöffnetem Verschlussdeckel (212) definiert.

8. Spritzgiesswerkzeug nach einem der vorhergehenden Ansprüche, bei dem die Matrizen (132, 134) verschieblich gegen das Mittelteil (14) gelagert sind, und bei dem ein Schieber (10) und eine Abstreifplatte (9) zum Entformen vorgesehen sind.

9. Spritzgiessmaschine,
mit einem Spritzgiesswerkzeug (100) nach einem der vorhergehenden Ansprüche,
mit einer ersten Spritzeinheit (200), mit der das erste Angusssystem (15) fest verbunden ist,
mit einer weiteren Spritzeinheit (300), mit der das weitere Angusssystem (16) fest verbunden ist,
mit einem Drehteller (3), auf dem das Mittelteil (14) des Spritzgiesswerkzeugs (100) angeordnet ist, und
mit einem Antrieb zum Längsverschieben der Spritzeinheiten (200, 300) zueinander.

10. Verfahren zum Spritzgiessen einer Tube mit einem Spritzgießwerkzeug nach einem der Ansprüche 1-8,
bei dem eine erste Spritzeinheit (200) einen ersten Kunststoff in eine erste Kavität eines Spritzgiesswerkzeugs (100) zum Bilden eines Tubenkörpers (20) spritztgiesst, und
bei dem eine weitere Spritzeinheit (300) ein Verschlussteil (21) aus einem weiteren Kunststoff an einen in einer weiteren Kavität des Spritzgiesswerkzeugs (100) enthaltenen Tubenkörper anspritzt.

11. Verfahren nach Anspruch 10, bei dem das Spritzgiessen des Tubenkörpers (20) und das Spritzgiessen des Verschlussteils (21) für den in der weiteren Kavität enthaltenen Tubenkörper gleichzeitig durchgeführt werden.

12. Verfahren nach Anspruch 10 oder 11, bei dem die erste Spritzeinheit (200) den ersten Kunststoff an eine in die erste Kavität eingelegte Folie zum Bilden eines Tubenkörpers (20) anspritzt, bei dem nach dem Spritzgiessen des Verschlussteils (21) die in der weiteren Kavität enthaltene Tube aus Tubenkörper und angespritztem Verschlussteil entformt wird, und bei dem eine Folie in die freigewordene weitere Kavität eingelegt wird.

13. Verfahren nach Anspruch 12, bei dem nach dem Einlegen der Folie ein die Kavitäten enthaltendes Mittelteil (14) des Spritzgiesswerkzeugs (100) gedreht und in eine Ausrichtung gebracht wird, in der die weitere Kavität eine Position zum Zusammenwirken mit der ersten Spritzeinheit (200) einnimmt zum Anspritzen des ersten Kunststoffs an die in die weitere Kavität eingelegte Folie (22), und in der die ersten Kavität mit dem darin enthaltenen Tubenkörper eine Position zum Zusammenwirken mit der weiteren Spritzeinheit (300) einnimmt zum Anspritzen eines Verschlussteil (21) an den Tubenkörper.

14. Verfahren nach Anspruch 12, bei dem zum Entformen der in der weiteren Kavität enthaltenen Tube:
- die weitere Spritzeinheit (300) in eine von dem Mittelteil (14) beabstandete Position bewegt wird,
- die weitere Matrize (134) in eine von dem Mittelteil (14) beabstandete Position bewegt wird und damit der Tubenkörper von dem weiteren Kern (133) entformt wird,
- ein Schieber (10) die Tube hält,
- die weitere Matrize (134) zurück zum Mittelteil (14) bewegt wird und damit der Tubenkörper von der weiteren Matrize (134) entformt wird,
- das Verschlussteil (21) durch eine Abstreifplatte (9) entformt wird, und
- der Schieber (10) die Tube freigibt.

15. Verfahren nach Anspruch 14, bei dem ein Roboter (4) die Tube greift bevor der Schieber (10) die Tube freigibt, und bei dem der Roboter (4) die Folie in die freigewordene weitere Kavität einlegt.

## Claims

1. Injection mould,
with a middle part (14),
with at least a first core (131) on one side of the middle part (14) and with a first die (132) forming a first tube-shaped cavity together with the first core (131),
with at least a further core (133) on a further side of the middle part (14) and with a further die (134) forming a further tube-shaped cavity together with the further core (133),
with a first gating system (15) for injection moulding of a first plastic into the one cavity, for forming a tube body (20) in this cavity,
and
with a further gating system (16) for injection moulding of a further plastic in a mould for forming a closing part (21) for a tube body arranged in the other cavity, which tube body codetermines the mould for the closing part (21) in such a way that the closing part (21) is injected onto the tube body during the injection moulding of the closing part (21).

2. Injection mould according to claim 1, having such an orientation of the middle part (14) for injection moulding that the one cavity assumes a position for interacting with the first gating system (15) and at the same time the other cavity assumes a position for interacting with the further gating system (16).

3. Injection mould according to claim 1 or 2, wherein the middle part (14) is rotatably mounted for its transition to such an orientation that the one cavity assumes a position for interacting with the further gating system (16), and for a simultaneous transition of the other cavity into a position for interacting with the first gating system (15).

4. Injection mould according to one of the preceding claims, wherein the first gating system (15) is adapted for injection moulding of the first plastic onto a foil which is laid inside the one cavity, for forming the tube body (20) in this cavity, and wherein particularly a mould is provided for injection moulding of a frontal end part (201) of the tube body (20) by means of the first gating system (15).

5. Injection mould according to one of the preceding claims, wherein the first gating system (15) is arranged in a stationary way and the further gating system (16) is arranged in a shiftable way.

6. Injection mould according to one of the preceding claims, wherein the mould for the closing part (21) is adapted for injection moulding of a closing part (21) with a closing bottom (211) and a closing cover (212) connected to the closing bottom (211) by means of a hinge (213), and wherein the mould for the closing bottom (211) is arranged on the tube body (20) for circumferential injection onto the closing bottom (211).

7. Injection mould according to claim 6, wherein the mould for the closing part (21) defines the closing part (21) with opened closing cover (212).

8. Injection mould according to one of the preceding claims, wherein the dies (132, 134) are supported in a way shiftable towards the middle part (14), and wherein a shifter (10) and a stripper plate (9) for deforming are provided.

9. Injection mould machine,
with an injection mould (100) according to one of the preceding claims,
with a first injection unit (200) to which the first gating system (15) is firmly connected,
with a further injection unit (300), to which the further gating system (16) is firmly connected,
with a rotating plate (3) on which the middle part (14) of the injection mould (100) is arranged, and
with an actuator for longitudinal shifting of the injection units (200, 300) towards one another.

10. Method for injection moulding of a tube by means of an injection mould according to one of the claims 1 to 8,
wherein a first injection unit (200) injects a first plastic into a first cavity of an injection mould (100) for forming a tube body (20), and
wherein a further injection unit (300) injects a closing part (21) made of a further plastic onto a tube body contained in a further cavity of the injection mould (100).

11. Method according to claim 10, wherein the injection moulding of the tube body (20) and the injection moulding of the closing part (21) are carried out simultaneously for the tube body contained in the further cavity.

12. Method according to claim 10 or 11, wherein the first injection unit (200) injects the first plastic onto a foil laid inside the first cavity, for forming a tube body (20), wherein after the injection moulding of the closing part (21) the tube contained in the further cavity and made of the tube body and the injected closing part is deformed, and wherein a foil is laid into the meanwhile freed further cavity.

13. Method according to claim 12, wherein after laying the foil a middle part (14) of the injection mould (100) containing the cavities is rotated and oriented in a position in which the further cavity assumes a position for interacting with the first injection unit (200), for injecting the first plastic onto the foil (22) laid into the further cavity, and in which the first cavity with the tube body contained therein assumes a position for interacting with the further injection unit (300) for injecting a closing part (21) onto the tube body.

14. Method according to claim 12, wherein, in order to deform the tube contained in the further cavity,:
- the further injection unit (300) is moved into a position spaced from the middle part (14),
- the further die (134) is moved into a position spaced from the middle part (14) such that the the tube body is deformed by the further core (133),
- a shifter (10) supports the tube,
- the further die (134) is moved back to the middle part (14) such that the tube body is deformed by the further die (134),
- the closing part (21) is deformed by a stripper plate (9), and
- the shifter (10) releases the tube.

15. Method according to claim 14, wherein a robot (4) grips the tube before the shifter (10) releases the tube, and wherein the robot (4) lays the foil into the freed further cavity.

## Revendications

1. Machine de moulage par injection,
avec une partie centrale (14),
avec au moins un premier noyau (131) d'un côté de la partie centrale (14) et avec une première matrice (132) formant avec le premier noyau (131) une première cavité en forme de tube,
avec au moins un autre noyau (133) d'un autre côté de la partie centrale (14) et avec une autre matrice (134) formant avec l'autre noyau (133) une autre cavité en forme de tube,
avec un premier système d'entrée (15) pour le moulage par injection d'un premier plastique dans l'une cavité, pour former un corps de tube (20) dans cette cavité,
et
avec un autre système d'entrée (16) pour le moulage par injection d'un autre plastique dans un moule afin de former une partie de fermeture (21) pour un corps de tube arrangé dans l'autre cavité, le corps de tube codéterminant le moule pour la partie de fermeture (21) de sorte que la partie de fermeture (21) soit injectée sur le tube pendant le moulage par injection de la partie de fermeture (21).

2. Machine de moulage par injection selon la revendication 1, ayant une orientation de la partie centrale (14) pour le moulage par injection telle que l'une cavité assume une position pour interagir avec le premier système d'entrée (15) et au même temps l'autre cavité assume une position pour interagir avec l'autre système d'entrée (16).

3. Machine de moulage par injection selon la revendication 1 ou 2, la partie centrale (14) étant montée de manière pivotable pour sa transition vers une orientation telle que l'une cavité assume une position pour interagir avec l'autre système d'entrée (16), et pour une transition simultanée de l'autre cavité dans une position pour interagir avec le premier système d'entrée (15) .

4. Machine de moulage par injection selon l'une des revendications précédentes, le premier système d'entrée (15) étant adapté pour un moulage par injection du premier plastique sur une feuille posée dans l'une cavité, pour former le corps de tube (20) dans cette cavité, et particulièrement un moule étant prévu pour le moulage par injection d'une partie terminale frontale (201) du corps de tube (20) par le premier système d'entrée (15).

5. Machine de moulage par injection selon l'une des revendications précédentes, le premier système d'entrée (15) étant arrangé de manière stationnaire et l'autre système d'entrée (16) étant arrangé de manière déplaçable.

6. Machine de moulage par injection selon l'une des revendications précédentes, le moule pour la partie de fermeture (21) étant adapté pour le moulage par injection d'une partie de fermeture (21) avec un fond fermant (211) et un couvercle fermant (212) connecté au fond fermant (211) par une charnière (213), et le moule pour le fond fermant (211) étant arrangé sur le corps de tube (20) pour une injection circonférentielle sur le fond fermant (211).

7. Machine de moulage par injection selon la revendication 6, le moule pour la partie de fermeture (21) définissant la partie de fermeture (21) avec le couvercle (212) fermant ouvert.

8. Machine de moulage par injection selon l'une des revendications précédentes, les matrices (132, 134) étant supportées de manière déplaçable vers la partie centrale (14), et une glissière (10) et une plaque de démoulage (9) pour déformer étant prévues.

9. Système de moulage par injection
avec une machine de moulage par injection selon l'une des revendications précédentes,
avec une première unité d'injection (200) à laquelle le premier système d'entrée (15) est connecté fermement,
avec une autre unité d'injection (300) à laquelle l'autre système d'entrée (16) est connecté fermement,
avec une plaque de rotation (3) sue laquelle la partie centrale (14) de la machine de moulage par injection (100) est arrangée, et
avec un actionneur pour un déplacement longitudinal des unités d'injection (200, 300) l'une vers l'autre.

10. Procédé de moulage par injection d'un tube à l'aide d'une machine de moulage par injection selon l'une des revendications 1 à 8,
une première unité d'injection (200) injectant un premier plastique dans une première cavité de la machine de moulage par injection (100) afin de former un corps de tube (20), et
une autre unité d'injection (300) injectant une partie de fermeture (21) d'un autre plastique sur un corps de tube situé dans une autre cavité de la machine de moulage par injection (100).

11. Procédé selon la revendication 10, le moulage par injection du corps de tube (20) et le moulage par injection de la partie de fermeture (21) étant effectués simultanément pour le corps de tube situé dans l'autre cavité.

12. Procédé selon la revendication 10 ou 11, la première unité d'injection (200) injectant le premier plastique sur une feuille posée dans la première cavité, pour former un corps de tube (20), après le moulage par injection de la partie de fermeture (21) le tube situé dans l'autre cavité et constitué du corps de tube et de la partie de fermeture injectée étant déformé, et une feuille étant posée dans l'autre cavité entre temps libérée.

13. Procédé selon la revendication 12, une partie centrale (14) de la machine de moulage par injection (100) contenant les cavités étant pivotée et orientée dans une position dans laquelle l'autre cavité assume une position afin d'interagir avec la première unité d'injection (200) pour d'injecter le premier plastique sur la feuille (22) posée dans l'autre cavité et dans laquelle la première cavité avec le corps de tube situé dedans assume une position afin d'interagir avec l'autre unité d'injection (300) pour injecter une partie de fermeture (21) sur le corps de tube, après poser la feuille.

14. Procédé selon la revendication 12,
- l'autre unité d'injection (300) étant déplacée dans une position à une distance de la partie centrale (14),
- l'autre matrice (134) étant déplacée dans une position à une distance de la partie centrale (14) de sorte que le corps de tube soit déformé par l'autre noyau (133),
- une glissière (10) supportant le tube,
- l'autre matrice (134) étant déplacée vers la partie centrale (14) de sorte que le corps de tube soit déformé par l'autre matrice (134),
- la partie de fermeture (21) étant déformée par une plaque de démoulage (9), et
- la glissière (10) relâchant le tube,
afin de déformer le tube situé dans l'autre cavité.

15. Procédé selon la revendication 14, un robot (4) attrapant le tube avant que la glissière (10) relâche le tube, et le robot (4) posant la feuille dans l'autre cavité libérée.
